# EUROPEAN PATENT SPECIFICATION

(11) **EP 2 580 511 B1**
(45) Date of publication and mention of the grant of the patent: **16.04.2014**
(21) Application number: 11726327.7
(22) Date of filing: 07.06.2011
(51) Int. Cl.: F16L 47/22

(54) **SHRINK SLEEVE FOR JOINING INSULATED PIPES**
SCHRUMPFMUFFE ZUR VERBINDUNG VON ISOLIERTEN ROHRLEITUNGEN
MANCHON RÉTRACTABLE PERMETTANT DE JOINDRE DES TUYAUX CALORIFUGÉS

(30) Priority: 09.06.2010 DK 201000497
(43) Date of publication of application: 17.04.2013
(73) Proprietor: Logstor A/S, 9670 Løgstør (DK)
(72) Inventor: LUND, Helle, DK-9700 Brønderslev (DK)
(74) Representative: Zacco Denmark A/S
(86) International application number: PCT/DK2011/050199
(87) International publication number: WO 2011/154005

(56) References cited:
- GB-A- 2 184 804
- US-A1- 2001 041 235

## Description

### FIELD OF THE INVENTION

In the industry of district heating/cooling it is known to install and assemble pipelines by joining insulated pipes. In its most basic embodiment, the insulated pipe comprises an inner pipe, surrounded by a layer of insulation material, which again is covered by a casing. The inner pipe and the casing can be made of polymer-based materials and metals. Typically, the insulation pipes are though embodied with an inner pipe of metal, a closed-cell and/or solid thermal insulation layer and a polymer-based casing.

The insulated pipes are manufactured in required lengths that enable transportation. The insulated pipes are manufactured such that the length of the inner pipe exceeds the length of the insulation layer and the casing. Thus at the end of the insulated pipe, the inner pipe protrudes relative to the insulation layer and the casing. At the installation site the insulated pipes are joined end-to-end, first by joining the inner pipes of the two insulated pipes lying end-to-end. Prior to welding the inner pipes, a shrink sleeve is drawn or pushed over the casing of one of the insulated pipes to be joined. After welding of the inner pipes, the shrink sleeve is moved so that it rests on the casing of the two insulated pipes. The ends of the shrink sleeve are subsequently shrunk impermeably onto the two casings of the two insulated pipes. This shrinking process is normally done by exposing the ends of the shrink sleeve to heat. Through a hole in the shrink sleeve, insulation material can be led into the cavity between the joined inner pipes and the sleeve. Through a second hole in the shrink sleeve a valve can be inserted. This valve will typically be embodied as an air valve. Hereby the joined inner pipes are insulated. The wall holes are hereafter to be impermeably closed. The impermeable closure of the wall holes is central to the functionality of the entire pipeline, as primarily the longitudinal movements of an installed pipeline can loosen or detach the plugs from the sleeve. Today it is known to weld or patch a plug onto an area in proximity to the holes.

In the prior art the sleeve is a hollow shell with a tubular shape. The sleeve is normally made of a polymer-based material, which after manufacturing is exposed to irradiation such as an e-beam (electron beam). After such a treatment for example polyethylene is denoted PEX or PE-Xc. The sleeve is hereby cross-linked, meaning that the polymer fibers of the material will change direction and link to other layers (molecule chains). As an effect of this treatment, the polymer-based material obtains a high mechanical strength and a high temperature resistivity. Prior to irradiation, the sleeve is normally manufactured in such a way that the diameter of the ends is smaller than the diameter of the center section there between. The sleeve can, however, also have the same diameter along the entire length of the sleeve. After irradiation, the ends of the sleeve are heated and the diameter of these is extended, such that the diameter here will be equal to or greater than the diameter of the central section. The sleeve can after irradiation also be heated and extended such that the sleeve has the same diameter along its entire length. As described, the sleeve is fastened to the casing of the two insulated pipes by heating the ends, whereby the material here will try to reach its initial size. Hence, the material in the ends shrinks as a result of the heating thereof. The casing of the two pipes will prevent it from reaching the initial diameter, however, the sleeve will be firmly fastened to the casing of the two insulated pipes. This effect is a result of the cross linking of the material and the following extension of the diameter in the ends of the sleeve. Since the wall hole(s) of the sleeve will have to be impermeably closed or sealed off (plugged) after filling with or injecting the insulation material, the material around the wall hole cannot be fully cross-linked, as the cross-linked material has a high temperature resistivity. The process of closing the wall hole by welding a plug onto the sleeve does therefore simply not harmonize with the temperature resistivity of the sleeve material. Consequently, the welding process would be very difficult to perform, if not impossible. Hence, the cross linked material cannot melt sufficiently and thereby a complete integration with the sleeve material is not obtained, which is essential to a successful sealing of the wall hole using a welding process.

It is known to solve this problem by mounting or clamping for example protective metal discs onto the wall material proximate to the wall hole. When the sleeve is exposed to irradiation, the wall material covered by the metal discs will only to a limited extent be exposed to irradiation and thereby not be completely cross linked. Hereby the material proximate to the wall hole becomes weldable in that the material has a lower temperature resistivity than the rest of the sleeve. The weldable properties of the material in proximity to the wall holes are, however, not sufficient to obtain the required welding quality and material integration. Further, the manufacturing process of mounting and dismounting the metal discs is a very time-consuming manual process, as for example one counterpart of the discs must be inserted through an end of the sleeve which at that time has a very small diameter. Consequently, this manual process contributes to very high manufacturing costs

In an attempt to enhance weldability of the sleeve material in proximity to the holes, US 2001/0041235 discloses a heat shrinkable member for forming a connection between tubular sections. The member comprises a tubular section which is cross-linked. In order to be able to close the wall holes of the member, an uncross-linked or less uncrossed-linked patch is bonded to the central section of the member. A wall hole for injection of insulation material is drilled through the patch and the cross-linked material. When the wall hole is to be closed, the plug is bonded to the patch. The patch can be attached to both inside and outside of the heat shrinkable member by fusion bonding or welding or by using of a conventional adhesive agent. The patch can be attached to the heat shrinkable member before or after the whole member is exposed to irradiation. Although the welding properties might be improved by this type of shrinkable member, the manufacturing cost associated with attaching the patches is essentially undesired.

### SUMMARY OF THE INVENTION

The present invention relates to a shrink sleeve for joining the casing of two insulated pipes lying end-to-end, where the shrink sleeve has a tubular shape made of a first polymer-based material susceptible to irradiation. The tubular shape of the shrink sleeve consists of the first polymer-based material and a second polymer-based material, where the second polymer-based material is more resistant to irradiation than the first material. Further, the second polymer-based material can be weldable. In another embodiment the outer surface and/or the inner surface of the shrink sleeve are/is continuous. The shrink sleeve is advantageous in that it consists both of a material susceptible to irradiation and one resistant to irradiation in the same tubular shape. Hereby the shrink sleeve can be irradiated without changing its tubular shape or adding any parts, such as protective metal discs, prior to that treatment. In addition, the second polymer-based material of the shrink sleeve is weldable without jeopardizing the geometry of its tubular shape. The tubular shape of the shrink sleeve is essential to obtain a uniform isolation of the pipeline where shrink sleeves are placed. In addition, the continuous inner and/or outer surfaces of the shrink sleeve will enable a pipeline to extend longitudinally.

In another embodiment of the shrink sleeve of the present invention, the second polymer-based material is placed in at least one delimited area of the shrink sleeve. The delimited area can be surrounded by the first polymer-based material, extend in the whole circumference of the shrink sleeve and/or extend in a part of the circumference of the shrink sleeve. The at least one delimited area of the second polymer-based material can also be approximately circular. Further, the second polymer-based material can be transparent or have a different color. Hereby a large degree of freedom is obtained in that wall holes can be placed where required. A transparent second polymer-based material enables inspection of for example the expansion process of liquid insulation material injected into the shrink sleeve.

### BRIEF DESCRIPTION OF THE DRAWINGS

In the following, the invention will be described referring to the figures, where
figure 1 illustrates an insulated pipe of the prior art;
figures 2a and 2b illustrate a shrink sleeve of the prior art;
figure 3 illustrates a shrink sleeve according to a first embodiment of the present invention;
figure 4 illustrates a shrink sleeve according to a second embodiment of the present invention;
figure 5a and 5b illustrate a shrink sleeve according to a third and fourth embodiment of the present invention;
figure 6 illustrates the cross-section of the shrink sleeve depicted in figure 3;
figure 7a and 7b illustrate two different cross sections of two different embodiments of the shrink sleeve of the present invention, and
figure 8 illustrates yet another embodiment of the shrink sleeve of the present invention.

### DESCRIPTION OF EMBODIMENTS

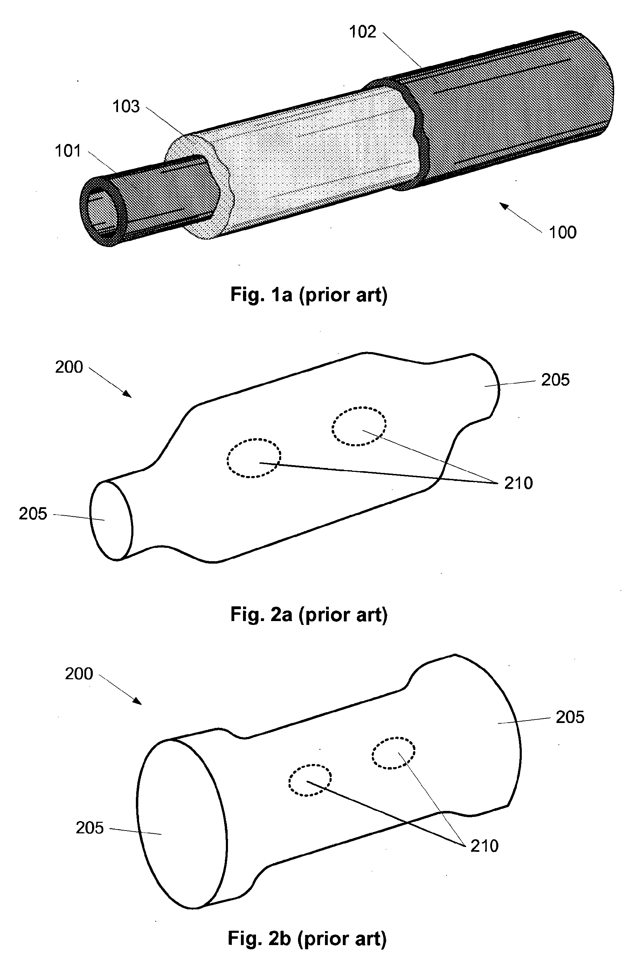

Figure 1 illustrates an insulated pipe 100 known in the art, comprising an inner pipe 101 surrounded by a layer of insulation material 103, which again is covered by a casing 102. The inner pipe 101 and the casing 102 can be made of polymer-based materials and metals. In the context of the present invention, the insulated pipe 100 is embodied with an inner pipe 101 of metal or polymer, a closed-cell and/or solid thermal insulation layer 103 and a polymer-based casing 102.

Figure 2a-b illustrate a shrink sleeve 200 of the prior art, where figure 2a illustrates the shrink sleeve 200, where the ends 205 of the shrink sleeve have not yet been expanded, and figure 2b illustrates the shrink sleeve 200 after expansion of the ends 205. The shrink sleeve 200 comprises two wall holes 210. The shrink sleeve 200 is made of one material susceptible to irradiation. Prior to exposing the shrink sleeve 200 to irradiation, the wall material in proximity to the two wall holes 210 has been clamped with metal discs (not shown). The wall material covered by the metal discs will be exposed less to irradiation, than the rest of the shrink sleeve. Thereby the material in these less exposed areas is less cross-linked compared to the remaining part of the shrink sleeve 200. Although the material in proximity to the wall holes 210 has been less cross-linked. The material in the area which has been less crosslinked is more suitable for welding. Generally welding properties of the material are reduced as crosslinking is increased. After exposure to irradiation, the ends 205 of the shrink sleeve 200 are expanded, see figure 2b.

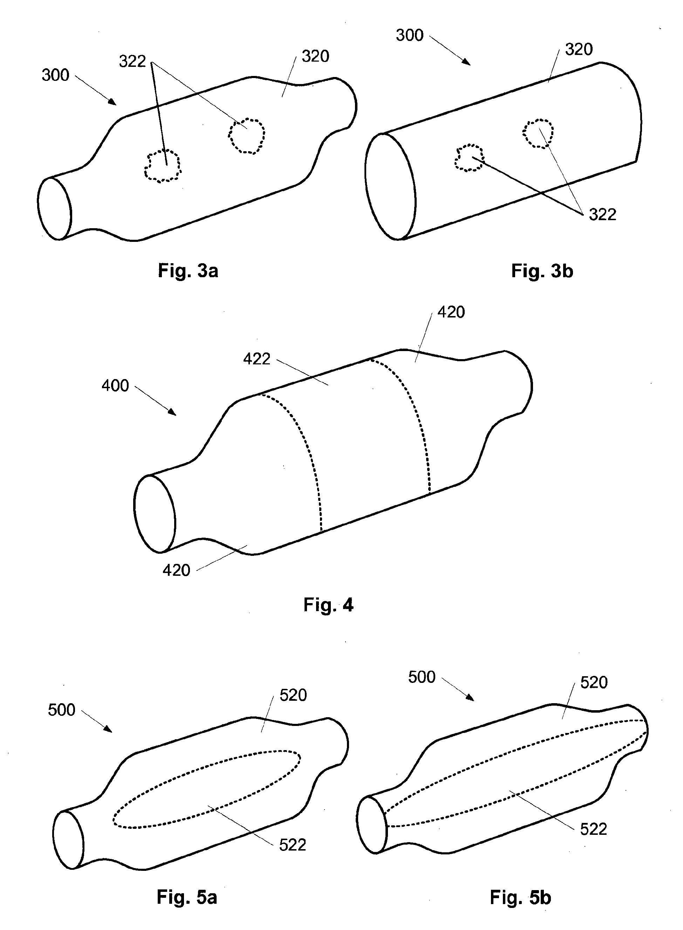

Figure 3a illustrates a shrink sleeve 300 according to a first embodiment of the present invention. The shrink sleeve 300 comprises a first polymer-based material 320 susceptible to irradiation and a second polymer-based material 322 more resistant to irradiation reducing the amount of cross linking significantly. After irradiation only the second polymer-based material 322 will be fully weldable. After irradiation, the diameter of the ends of shrink sleeve 300 has been expanded, see figure 3b. When joining the polymer-based casing 102 of the two insulated pipes 100, the ends of the shrink sleeve 300 will be fully shrinkable, as the material here has been fully cross-linked and subsequently expanded. In addition, the cavity between the joined inner pipes 101 and the shrink sleeve 300 can be filled or injected with e.g. expanding insulation material through wall holes positioned in the second polymer-based material 322. Hereafter these wall holes can be plugged and closed impermeably by welding. The quality of that welding will with this embodiment not be jeopardized by the poor welding properties (high temperature resistivity) of the material in proximity to the wall holes as known in the prior art.

Figure 4 illustrates a shrink sleeve 400 according to a second embodiment of the present invention. In this embodiment the second polymer-based material 422 resistant to irradiation covers the whole circumference of the shrink sleeve 400.

Figure 5a and 5b illustrate a shrink sleeve 500 according to a third and fourth embodiment of the present invention. In this embodiment the second polymer-based material 522 resistant to irradiation covers an elongated area relative to the longitudinal axis of the shrink sleeve 500.

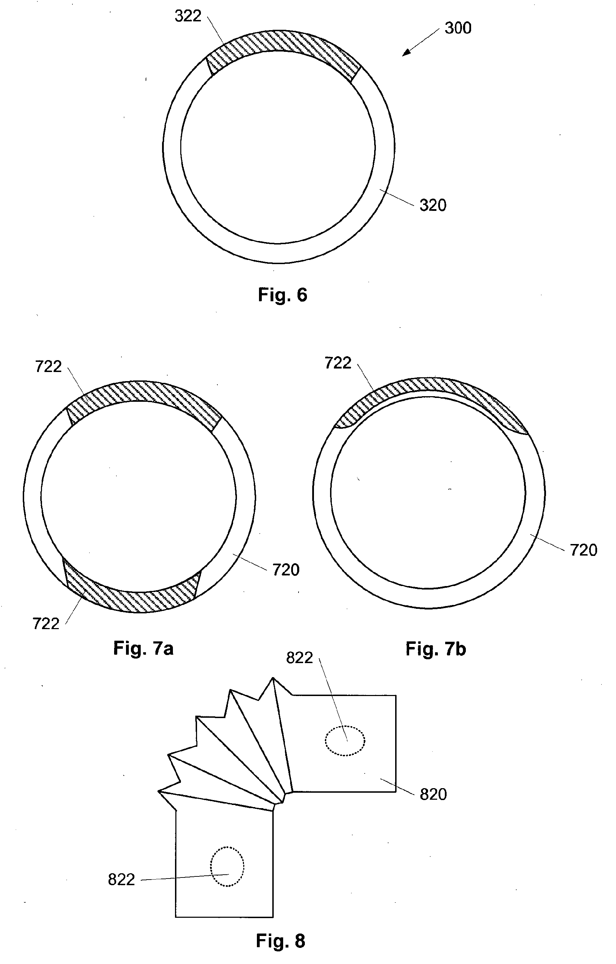

Figure 6 illustrates the cross-section of the shrink sleeve 300 depicted in figure 3. As depicted, the outer surface of the shrink sleeve 300 is continuous.

Figure 7a and 7b illustrate two different cross sections of two different embodiments of the shrink sleeve 700 of the present invention. In figure 7a the shrink sleeve 700 has two areas with a second polymer-based material 722 being more resistant to irradiation than the rest of the shrink sleeve. In figure 7b the second polymer-based material 722 being more resistant to irradiation faces only the outer surface of the shrink sleeve 700. Thus, the inner wall of the shrink sleeve 700 is constituted only by the first polymer-based material 720 being more susceptible to irradiation.

Figure 8 illustrates another embodiment of the shrink sleeve 800 of the present invention. The shrink sleeve 800 consists of a first polymer-based material 820 susceptible to irradiation and a second polymer-based material 822 resistant to irradiation.

The shrink sleeve 300, 400, 500, 700, 800 could be manufactured by a two-component blow or injection molding process. These manufacturing processes could also be combined with an in-mould technique, such that the second polymer-based material 322, 422, 522, 722, 822 is inserted in the molding tool prior to injecting or leading the first polymer-based material 320, 420, 520, 720, 820 into the tool. The wall holes in the shrink sleeve can be varied both in terms of numbers and in terms of their position on the shrink sleeve.

## Claims

1. A shrink sleeve for joining the casing of two insulated pipes lying end-to-end, where said shrink sleeve has a tubular shape comprising a first polymer-based material susceptible to irradiation, **characterized in that** said tubular shape of said shrink sleeve consists of said first polymer-based material and a second polymer-based material, where said second polymer-based material is significantly more resistant to said irradiation than said first polymer-based material.

2. A shrink sleeve according to claim 1, where said second polymer-based material is weldable after irradiation.

3. A shrink sleeve according to claims 1-2, where the outer surface of said shrink sleeve is continuous.

4. A shrink sleeve according to claims 1-3, where the inner surface of said shrink sleeve is continuous.

5. A shrink sleeve according to claims 1-4, where said second polymer-based material is placed in at least one delimited area of said shrink sleeve

6. A shrink sleeve according to claims 1-5, where said second polymer-based material is surrounded by said first polymer-based material.

7. A shrink sleeve according to claims 5-6, where said at least one delimited area of said second polymer-based material extends over the whole circumference of said shrink sleeve.

8. A shrink sleeve according to claims 5-6, where said at least one delimited area of said second polymer-based material extends over a part of the circumference of said shrink sleeve.

9. A shrink sleeve according to claims 5-6, where said at least one delimited area of said second polymer-based material is approximately circular.

10. A shrink sleeve according to claims 1-9, where said second polymer-based material is transparent.

## Patentansprüche

1. Schrumpfmuffe zum Verbinden des Gehäuses von zwei gedämmten Rohrleitungen, die Ende an Ende liegen, wobei die Schrumpfmuffe eine rohrförmige Form aufweist, umfassend ein erstes polymerbasiertes Material, welches empfänglich für Bestrahlung ist, **dadurch gekennzeichnet, dass** die rohrförmige Form der Schrumpfmuffe aus dem ersten polymerbasierten Material und einem zweiten polymerbasierten Material besteht, wobei das zweite polymerbasierte Material für die Bestrahlung wesentlich empfänglicher ist als das erste polymerbasierte Material.

2. Schrumpfmuffe nach Anspruch 1, wobei das zweite polymerbasierte Material nach Bestrahlung schweißbar ist.

3. Schrumpfmuffe nach den Ansprüchen 1-2, wobei die Außenfläche der Schrumpfmuffe kontinuierlich ist.

4. Schrumpfmuffe nach den Ansprüchen 1-3, wobei die Innenfläche der Schrumpfmuffe kontinuierlich ist.

5. Schrumpfmuffe nach den Ansprüchen 1-4, wobei das zweite polymerbasierte Material in zumindest einem begrenzten Bereich der Schrumpfmuffe angeordnet ist.

6. Schrumpfmuffe nach den Ansprüchen 1-5, wobei das zweite polymerbasierte Material von dem ersten polymerbasierten Material umgeben ist.

7. Schrumpfmuffe nach den Ansprüchen 5-6, wobei sich der zumindest eine begrenzte Bereich des zweiten polymerbasierten Materials über den gesamten Umfang der Schrumpfmuffe erstreckt.

8. Schrumpfmuffe nach den Ansprüchen 5-6, wobei sich der zumindest eine begrenzte Bereich des zweiten polymerbasierten Materials über einen Teil des Umfangs der Schrumpfmuffe erstreckt.

9. Schrumpfmuffe nach den Ansprüchen 5-6, wobei der zumindest eine begrenzte Bereich des zweiten polymerbasierten Materials etwa kreisförmig ist.

10. Schrumpfmuffe nach den Ansprüchen 1-9, wobei das zweite polymerbasierte Material durchlässig ist.

## Revendications

1. Manchon rétractable pour joindre le boîtier de deux tuyaux calorifugés situés bout-à-bout, ledit manchon rétractable présentant une forme tubulaire comprenant un premier matériau à base de polymère susceptible de l'irradiation, **caractérisé en ce que** ladite forme tubulaire dudit manchon rétractable est constituée dudit premier matériau à base de polymère et d'un deuxième matériau à base de polymère, ledit deuxième matériau à base de polymère étant nettement plus résistant à ladite irradiation que ledit premier matériau à base de polymère.

2. Manchon rétractable selon la revendication 1, dans lequel ledit deuxième matériau à base de polymère est soudable après l'irradiation.

3. Manchon rétractable selon les revendications 1 à 2, dans lequel la surface extérieure dudit manchon rétractable est continue.

4. Manchon rétractable selon les revendications 1 à 3, dans lequel la surface intérieure dudit manchon rétractable est continue.

5. Manchon rétractable selon les revendications 1 à 4, dans lequel ledit deuxième matériau à base de polymère est placé dans au moins une zone délimitée dudit manchon rétractable.

6. Manchon rétractable selon les revendications 1 à 5, dans lequel ledit deuxième matériau à base de polymère est entouré par ledit premier matériau à base de polymère.

7. Manchon rétractable selon les revendications 5 à 6, dans lequel ladite au moins une zone délimitée dudit deuxième matériau à base de polymère s'étend sur la totalité de la circonférence dudit manchon rétractable.

8. Manchon rétractable selon les revendications 5 à 6, dans lequel ladite au moins une zone délimitée dudit deuxième matériau à base de polymère s'étend sur une partie de la circonférence dudit manchon rétractable.

9. Manchon rétractable selon les revendications 5 à 6, dans lequel ladite au moins une zone délimitée dudit deuxième matériau à base de polymère est à peu près circulaire.

10. Manchon rétractable selon les revendications 1 à 9, dans lequel ledit deuxième matériau à base de polymère est transparent.
